# EUROPEAN PATENT APPLICATION

(11) **EP 3 683 106 A1**
(43) Date of publication of application: **22.07.2020**
(21) Application number: 18856164.1
(22) Date of filing: 27.04.2018
(51) Int. Cl.: B60S 5/06

(54) **BATTERY CHANGING SYSTEM FOR ELECTRIC VEHICLE**

(30) Priority: 12.09.2017 CN 201710818389
(71) Applicant: Nio Co., Ltd., Shanghai 201804 (CN)
(72) Inventor: BENGTSSON, Jan, Jiading Shanghai 201804 (CN); LI, Nan, Jiading Shanghai 201804 (CN); TIAN, Xiaotao, Jiading Shanghai 201804 (CN); DING, Xikun, Jiading Shanghai 201804 (CN); MA, Yongyue, Jiading Shanghai 201804 (CN)
(74) Representative: Vossius & Partner Patentanwälte Rechtsanwälte mbB
(86) International application number: PCT/CN2018/084884
(87) International publication number: WO 2019/052188

(57) **Abstract**

Provided is a battery swap system for an electric vehicle, the battery swap system comprising: a battery pack management device (3), an automated battery swap device (1) provided on one side of the battery pack management device (3), and a manual battery swap device (2) provided on the other side of the battery pack management device (3). The battery pack management device (3) comprises a first battery exchange port (4) and a second battery exchange port (5), wherein the first battery exchange port (4) is used for receiving a used battery pack swapped off by the automated battery swap device (1), and supplying a fresh battery pack for the automated battery swap device (1); and the second battery exchange port (5) is used for receiving a used battery pack swapped off by the manual battery swap device (2), and supplying a fresh battery pack for the manual battery swap device (2). The battery swap system comprises both the automated battery swap device and the manual battery swap device. The system has a simple structure, is safe and reliable, is easy to operate, and can be widely used in various places. In addition, if one of the battery swap devices is faulty, a user can still use the other battery swap device to perform battery swapping normally, and good user experience is thus achieved.

## Description

### Technical Field

The invention relates to the technical field of battery swapping for electric vehicles, and in particular to a battery swap system for an electric vehicle.

### Background Art

Electric vehicles are means of transportation that can be driven by electric energy stored in batteries, and thus reduce the vehicle's dependence on fossil fuels. The electric vehicle is an important measure to solve the national energy security problem. Traction batteries are the core of electric vehicles, but the range provided by a traction battery per charge is far from being comparable to that of a traditional means of transportation. Therefore, how to replenish the traction battery quickly and conveniently with electric energy becomes an important factor in the use and promotion of the electric vehicles, but in the current battery charging technology, charging cannot be completed in a few minutes just like refueling. Hence, battery swapping becomes the only possible way to replenish the electric vehicles with electric energy.

Existing battery swap systems are mostly embedded battery swap systems, with the entire battery swap trolley being provided below the ground, and only one groove remaining above the ground for battery swapping at the bottom of the groove. Such a battery swap station cannot be moved, it requires advanced civil engineering, has a high construction cost, is inconvenient to maintain, is generally used indoors, cannot work outdoors under bad weather, and has a narrow scope of application. In addition, the existing battery swap system generally has only a manual battery swap system or an automated battery swap system. The entire battery swap system would not be used once there is any problem with some of the parts thereof, thus the user experience is not so good.

### Summary of the Invention

The technical problem to be solved by the invention is to provide a battery swap system for an electric vehicle, the battery swap system *co*mprising both an automated battery swap device and a manual battery swap device. In addition, each of the battery swap devices is formed by various components which are small in size, light in weight, easy to install and convenient to transport, thus the whole system has the advantages of a simple structure, safety and reliability, easy operation and easy implementation, and can be widely applied to various places. Meanwhile when one of the battery swap devices is faulty, a user can still use the other battery swap device normally to perform battery swapping, and the user experience is thus good.

In order to solve the above-mentioned technical problem, the invention provides a battery swap system for an electric vehicle, the battery swap system comprising:
an automated battery swap device, a manual battery swap device and a battery pack management device, wherein
the automated battery swap device is provided on one side of the battery pack management device, and the manual battery swap device is provided on the other side of the battery pack management device; the battery pack management device comprises a first battery exchange port and a second battery exchange port;
the first battery exchange port is used for receiving a used battery pack swapped off by the automated battery swap device, and for supplying a fresh battery pack for the automated battery swap device; and
the second battery exchange port is used for receiving a used battery pack swapped off by the manual battery swap device, and for supplying a fresh battery pack for the manual battery swap device.

Further, the automated battery swap device comprises:
a battery swap platform for supporting and positioning a vehicle;
a hoisting device provided on the battery swap platform for hoisting the vehicle to a first preset height, the first preset height being the height of the vehicle, when in place for battery swapping in the automated battery swap device, from the battery swap platform;
a guide rail with one end extending into the battery swap platform and the other end extending to the first battery exchange port; and
a battery swap trolley provided on the guide rail and capable of reciprocating along the guide rail to complete transportation of a battery pack between the vehicle and the first battery exchange port.

Further, the automated battery swap device further comprises an automated battery swap control module for coordinating and controlling the operation of each component of the automated battery swap device.

Further, the battery swap platform comprises:
a platform body for supporting the vehicle;
a ramp structure provided at at least one end, in a travelling direction, of the platform body;
a guide structure provided at two ends, in a vehicle width direction, of the platform body; and
a positioning structure for positioning and adjusting front and rear wheels of the vehicle so as to adjust the vehicle to a preset battery swap position.

Further, the hoisting device comprises:
a column structure fixedly connected to two ends, in a vehicle width direction, of the battery swap platform;
lifting robotic arms provided on the column structure to hoist the vehicle; and
support mechanisms having a one-to-one correspondence with the lifting robotic arms and used for supporting vehicle lift points.

Further, the hoisting device further comprises:
a synchronous lifting suspension chain connected to the lifting robotic arms; and
a motor drive structure for driving the synchronous lifting suspension chain to enable the lifting robotic arms to synchronously perform lifting.

Further, the support mechanism is provided with a photographing and positioning mechanism, for photographing and positioning the vehicle and the battery swap trolley after the vehicle is lifted to the first preset height by the hoisting device and the battery swap trolley enters an area under the vehicle;
the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit for adjusting the support mechanisms according to the obtained vehicle position deviation so as to adjust the position of the vehicle.

Further, the fine adjustment unit comprises a driving portion and a floating portion, the driving portion driving the support mechanisms to move so as to bring the vehicle into movement; and the floating portion floats with the movement of the vehicle, so as to adjust the position of the vehicle.

Further, the manual battery swap device comprises:
a vehicle hoister for hoisting the vehicle;
an auxiliary bolt disassembly device for tightening or loosening a bolt; and
a transfer trolley for transporting, exchanging and lifting the battery pack.

Further, the vehicle hoister comprises a main body frame structure, a support structure and a hoisting structure,
wherein the hoisting structure is provided on the main body frame and is connected to the support structure, the hoisting structure is used to lift the vehicle to a second preset height by hoisting the support structure, the second preset height being the height of the vehicle, when in place for battery swapping in the manual battery swap device, from the ground, and
the hoisting structure comprises a first lifting arm and a second lifting arm; and
the support structure is used for supporting vehicle lift points, and comprises a first support structure provided on the first lifting arm and a second support structure provided on the second lifting arm.

Further, the auxiliary bolt disassembly device comprises a floor type manipulator, which comprises a torque gun for tightening or loosening a bolt.

Further, the battery pack management device further comprises:
a battery pack receiving and outputting unit for receiving a used battery pack and outputting a fresh battery pack;
a battery pack charging unit for charging a used battery pack;
a battery pack storage unit for storing a fresh battery pack and a used battery pack; and
a control unit for controlling the battery receiving and outputting unit to receive or output a battery pack, controlling the battery pack charging unit to charge a battery pack, and controlling the battery pack storage unit to store a battery pack.

The invention has obvious advantages and beneficial effects as compared with the prior art. By means of the above technical solutions, a battery swap system for an electric vehicle of the invention can achieve considerable technical progress and practicality, has a wide range of industrial utility value, and has at least the following advantages.
(1) The battery swap system of the invention comprises both the automated battery swap device and the manual battery swap device, and when one of the battery swap devices is faulty, the user can still use the other battery swap device to perform battery swapping normally, and the user experience is thus improved.
(2) Various components of the battery swap device of the invention are independently provided and can be used separately, the components are small in size, light in weight, easy to install and convenient to transport, and therefore, the entire system is simple in structure, reliable, and easy to operate and implement, so that modularization and miniaturization are realized.
(3) All the processes of the automated battery swap device can be completed automatically by means of a control device without the need of manual battery swapping, saving on manual labor.
(3) During the automated battery swap, the vehicle is coarsely positioned and then precisely positioned so that the accuracy and efficiency of battery swapping are improved.
(4) During the manual battery swap, a battery swap worker can operate the transfer trolley, the vehicle hoister and the bolt disassembly device with a high battery swap accuracy, and with the manual battery swap device, battery swapping can be completed in a few minutes, achieving a high battery swap efficiency.
(5) The battery swap system is applicable to all parking lots and most vehicle repair stations, and can be widely applied to a variety of places.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief description of the drawings

Fig. 1 is a schematic diagram of a battery swap system for an electric vehicle provided in an embodiment of the invention.
Fig. 2 is a schematic diagram of an automated battery swap device of a battery swap system provided in an embodiment of the invention.
Fig. 3 is a schematic diagram of a battery swap platform of an automated battery swap device provided in an embodiment of the invention.
Fig. 4 is a schematic diagram of a photographing and positioning mechanism of an automated battery swap device provided in an embodiment of the invention.
Fig. 5 is a schematic diagram of a fine adjustment unit of a photographing and positioning mechanism provided in an embodiment of the invention.
Fig. 6 is a flow chart of an automated battery swap method provided in an embodiment of the invention.
Fig. 7 is a schematic diagram of a manual battery swap device of a battery swap system provided in an embodiment of the invention.
Fig. 8 is a schematic bottom view of a manual battery swap device provided in an embodiment of the invention.
Fig. 9 is a flow chart of a manual battery swap method provided in an embodiment of the invention.
Fig. 10 is a schematic diagram of a battery pack management device provided in an embodiment of the invention.

**[Description of Symbols]**

| | |
|---|---|
| 1: Automated battery swap device | 2: Manual battery swap device |
| 3: Battery pack management device | 4: First battery exchange port |
| 5: Second battery exchange port | |

### Detailed Description of Embodiments

In order to further illustrate the technical means used to achieve the intended purpose of the invention and the technical effects thereof, the implementation of a battery swap system for an electric vehicle proposed in the invention and the effects thereof are described in detail hereinafter in conjunction with the accompanying drawings and the preferred embodiments.

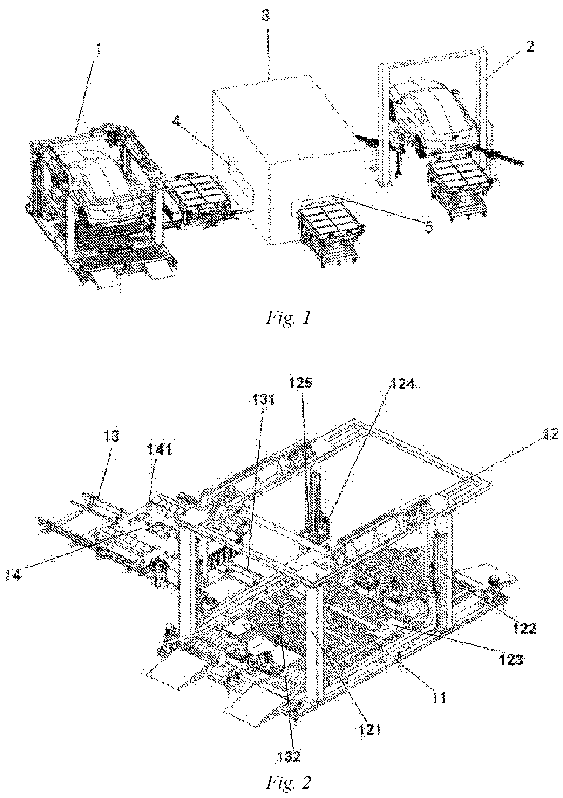

As shown in Fig. 1, the invention provides a battery swap system for an electric vehicle, the battery swap system comprising: an automated battery swap device 1, a manual battery swap device 2 and a battery pack management device 3, wherein the automated battery swap device 1 is provided on one side of the battery pack management device 3, the manual battery swap device 2 is provided on the other side of the battery pack management device, and the positional relationship of the three can be decided according to specific sites and user's preferences. The battery pack management device 3 comprises a first battery exchange port 4 and a second battery exchange port 5, wherein the first battery exchange port 4 is used for receiving a used battery pack swapped off by the automated battery swap device 1, and supplying a fresh battery pack for the automated battery swap device 1; and the second battery exchange port 5 is used for receiving a used battery pack swapped off by the manual battery swap device 2, and supplying a fresh battery pack for the manual battery swap device 2.

It should be noted that the term "used battery pack" in the invention refers to a battery pack detached from a vehicle during a battery swap, and does not limit the battery pack detached from a vehicle to a completely drained state. In the same way, the term "fresh battery pack" refers to a battery pack installed to the vehicle during a battery swap, and does not limit the battery pack installed to the vehicle to a fully charged state.

The term "electric vehicle" in the invention is not limited to only a battery electric vehicle, and may also be a hybrid vehicle.

The automated battery swap device and the manual battery swap device can be used separately and independently, and the automated and manual battery swapping are described respectively in detail as follows:

### I. Automated battery swapping

As shown in Fig. 2, the automated battery swap device 1 comprises: a battery swap platform 11, a hoisting device 12, a guide rail 13 and a battery swap trolley 14, wherein

the battery swap platform 11 is used to support and position a vehicle; the hoisting device 12 is provided on the battery swap platform 11 for hoisting the vehicle to a first preset height. The first preset height is the height of the vehicle, when in place for battery swapping in the automated battery swap device 1, from the battery swap platform 11; and the first preset height is set according to factors such as the model of the vehicle with a battery to be swapped. One end of the guide rail 13 extends into the battery swap platform 11, and the other end thereof extends to a first battery exchange port 4. The battery swap trolley 14 is provided on the guide rail 13 and can move back and forth along the guide rail 13 so as to complete the transportation of a battery pack between the vehicle and the first battery exchange port 4. As shown in Fig. 2, as an example, the extension direction of the guide rail 13 is perpendicular to the travelling direction of the vehicle entering and exiting the battery swap platform 11. However, it should be understood that the guide rail 13 serves as a path for the battery swap trolley 14 to enter and exit the battery swap platform 11, and the extension direction is intended to facilitate the entering and exiting of the battery swap trolley 14 and the battery swap operation, and can be adaptively adjusted.

The automated battery swap device 1 further comprises an automated battery swap control module (not shown in the figure) for coordinating and controlling the operation of each component of the automated battery swap device 1.

The guide rail 13 comprises two track rails 131 arranged parallel to each other and a rack 132 parallel to the track rails 131. The track rails 131 extend from the battery pack management device 3 to the interior of the battery swap platform 11 for the reciprocating movement of the battery swap trolley 14 between the battery swap platform 11 and the battery pack management device 3. The rack 132 is provided at least in the battery swap platform 11 for engagement with a gear (not shown in the figure) provided on the battery swap trolley 14 to precisely control the moving distance of the battery swap trolley 14 on the battery swap platform 11 and to improve the positioning precision of the battery swap trolley 14. In other examples, the rack 132 can be correspondingly provided on the part of the guide rail 13 close to the automated battery swap device 1, to precisely control the distance of the battery swap trolley 14 relative to the automated battery swap device 1. Alternatively, the rack 132 may also cover the length of the entire guide rail 13 to precisely control the moving distance of the battery swap trolley 14 over the entire walking path.

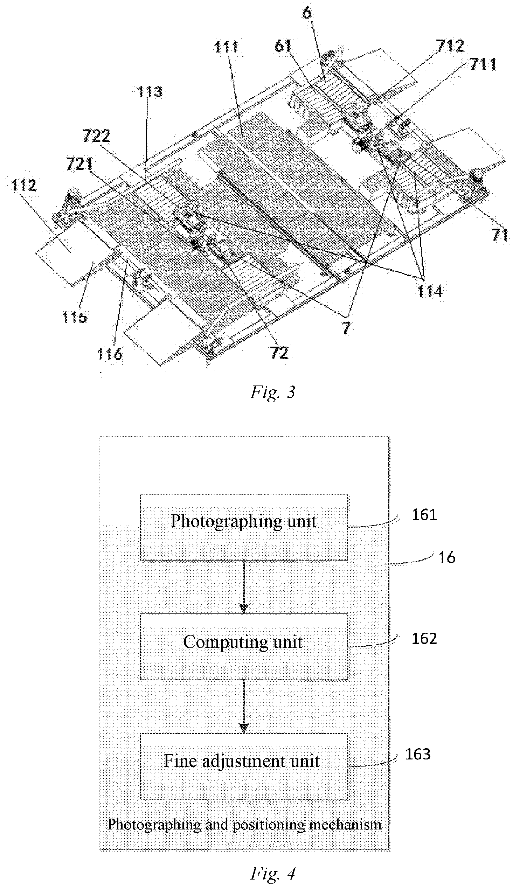

In the examples shown in Figs. 2 and 3, the parts of the two track rails 131 that extend into the battery swap platform 11 and the rack 132 are embedded in the battery swap platform 11 and are in the same plane as the battery swap platform 11, thus ensuring smooth rolling of the vehicle and high control precision, and it is possible to further reduce the time for battery swapping. The rack 132 on the battery swap trolley 14 not only enables the battery swap trolley 14 to enter the battery swap platform more quickly and accurately, but also controls the parking position of the battery swap trolley 14 according to the end position of the rack, thus further improving the precision and efficiency of battery swapping.

As shown in Fig. 3, the battery swap platform 11 comprises a platform body 111 for supporting a vehicle, a ramp structure 112 for guiding the vehicle to enter and exit the platform body 111, a guide structure 113 for guiding the vehicle when it enters the platform body 111, and a positioning structure 114 for positioning and adjusting the position of the vehicle on the platform body 111.

The platform body 111 is used to support the vehicle, allowing the vehicle to travel to the battery swap position. The gaps between the components of the platform body 111 may be filled with a fiber-reinforced plastic grille, which not only ensures the smooth entry of the vehicle into the battery swap platform 11, but also reduces the weight of the battery swap platform 11.

In the example shown in Figs. 2 and 3, the ramp structure 112 is provided at either end of the platform body 111 in the travelling direction, or may be provided at only one end thereof. The ramp structure 112 comprises a ramp body 115 and a spindle 116. The ramp body 115 is connected to the platform body 111 via the spindle 116 and is turned around the spindle 116 such that the ramp structure 112 is folded or deployed. When the vehicle enters and exits the battery swap platform 11, the ramp structure 112 is deployed; whereas in other cases, the ramp structure 112 can be folded to reduce the area occupied by the battery swap system.

The guide structure 113 corresponds to the ramp structure 112, is provided on the platform body 111, and extends to the ramp structure 112. Specifically, the guide structure 113 comprises guide members arranged in pairs at two ends of the platform body 111 respectively in the vehicle width direction, and the space between the guide members at both ends is defined as an area that allows passage of the vehicle, thereby preventing the vehicle from deviating from the path during entering and exiting the platform body 111 and from falling off the platform body 111. As an example, the guide structure 113 consists of guide rods, and the extension direction of the guide rods is substantially parallel to the travelling direction. During the entry of a vehicle, the ramp structure 112 and the guide structure 113 can together be used as a reference for guiding the vehicle to enter the battery swap platform 11 in a forward direction, enabling the stop position to be closer to an ideal position.

After the vehicle enters the platform body 111, front and rear wheels of the vehicle are positioned and adjusted by means of the positioning structure 114, so as to adjust the vehicle to the preset battery swap position.

In the example shown in Fig. 3, the travelling direction is the X-direction and the vehicle width direction is the Y-direction. The positioning structure 114 comprises an X-direction positioning unit 6 for adjusting the position of the vehicle in the X-direction and a Y-direction positioning unit 7 for adjusting the position of the vehicle in the Y-direction.

The X-direction positioning unit 6 comprises grooves 61 for supporting wheels, which may be the front wheels or the rear wheels. The incoming vehicle is determined to be in the stop position in the X-direction when the wheels enter the grooves 61. A description will be given with the X-direction positioning unit 6 used for supporting the front wheels of the vehicle. The Y-direction positioning unit 7 comprises a front-wheel Y-direction positioning unit 71 and a rear-wheel Y-direction positioning unit 72 respectively arranged at positions corresponding to the front wheels and the rear wheels of the vehicle. The front-wheel Y-direction positioning unit 71 comprises a front-wheel push rod motor 711 and front-wheel push rods 712 provided at two ends of the front-wheel push rod motor 711 in the Y-direction; the front-wheel push rod motor 711 is used to drive the front-wheel push rods 712 to move; and the front-wheel push rods 712 are used to push the front wheels to move, so as to position the front wheels in the Y-direction. The rear-wheel Y-direction positioning unit 72 comprises a rear-wheel push rod motor 721 and rear-wheel push rods 722 provided at two ends of the rear-wheel push rod motor 721 in the Y-direction; the rear-wheel push rod motor 721 is used to drive the rear-wheel push rods 722 to move; and the rear-wheel push rods 722 are used to push the rear wheels to move, so as to position the rear wheels in the Y-direction.

As shown in Fig. 2, the hoisting device 12 comprises: a column structure 121 for arranging lifting robotic arms 122, the lifting robotic arms 122 for hoisting the vehicle, and support mechanisms 123 for supporting vehicle lift points.

The column structure 121 is fixedly connected to two ends, in the vehicle width direction, of the battery swap platform 11. The column structure 121 is of a double-column structure or a four-column structure. In some embodiments, the column structure 121 comprises four columns, the battery swap platform 11 is of a rectangular structure, and the four columns are respectively provided at four corners of the battery swap platform 11. The lifting robotic arms 122 are provided on the column structure 121 to hoist the vehicle. The support mechanisms 123 have a one-to-one correspondence with the lifting robotic arms 122, and the support mechanisms 123 are used to support the vehicle lift points.

The hoisting device 12 further comprises a synchronous lifting suspension chain 124 and a motor drive structure 125, wherein the synchronous lifting suspension chain 124 is connected to the lifting robotic arms 122, so as to ensure the smooth lifting of the vehicle. The motor drive structure 125 is used to drive the synchronous lifting suspension chain 124, so as to enable the lifting robotic arms 122 to synchronously perform lifting. Existing hoisting devices use structures such as lead screw rods and hydraulic cylinders, which have a relatively poor synchronization. In the invention, the motor drive structure 125 and the synchronous lifting suspension chain 124 are used to ensure the synchronization and consistency of four hoisting points during the vehicle hoisting process.

The battery swap trolley 14 is provided with a positioning pin 141 for cooperating with a positioning hole of the vehicle body so as to align the battery swap trolley 14 with the battery swap position.

In some embodiments, after the vehicle is coarsely positioned by the battery swap platform 11, the hoisting device 12 lifts the vehicle to the first preset height. At this time, the position of the vehicle in the horizontal plane may be deviated from the accurate battery swap position to some extent. Therefore, a photographing and positioning mechanism 16 may be provided to further adjust the position of the vehicle, so as to increase the accuracy and efficiency of battery swapping. Specifically, the hoisting device 12 comprises four lifting robotic arms 122 and four corresponding support mechanisms 123 for respectively supporting four lift points of the vehicle. The support mechanism 123 is provided with a photographing and positioning mechanism 16. The photographing and positioning mechanism 16 photographs and positions the vehicle and the battery swap trolley, after the vehicle finishes positioning on the battery swap platform 11 and is lifted to the first preset height by the lifting device 12 and the battery swap trolley 14 enters an area under the vehicle.

In the example shown in Fig. 4, the photographing and positioning mechanism 16 comprises a photographing unit 161, a computing unit 162, and a fine adjustment unit 163, wherein the photographing unit 161 is used to photograph the positioning hole of the vehicle body and the positioning pin 141 of the battery swap trolley 14 to obtain photographic data, and the photographing unit 161 may be a camera; the computing unit 162 is used to compute a current vehicle position deviation according to the photographic data; and the fine adjustment unit 163 is used to adjust the support mechanism 123 according to the obtained vehicle position deviation so as to adjust the position of the vehicle.

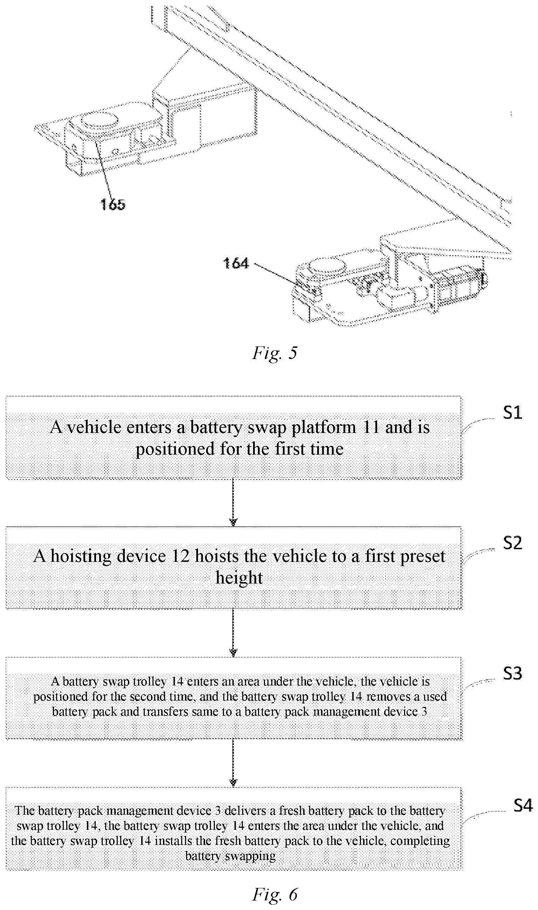

As shown in Fig. 5, the fine adjustment unit 163 comprises a driving portion 164 and a floating portion 165. The driving portion 164 drives the support mechanisms 123 to move such that the corresponding vehicle lift points are moved so as to bring the vehicle into movement. The floating portion 165 floats with the movement of the vehicle so as to adjust the position of the vehicle, and the fine adjustment unit 163 comprises at least one driving portion 164. Other portions thereof in contact with the vehicle are all provided as floating portions 164 that float with the movement of the vehicle.

Based on the above-mentioned automated battery swap device, as shown in Fig. 6, when automated battery swapping is performed, the operation method comprises the following steps.

In step S1, a vehicle enters the battery swap platform 11 and is positioned for the first time.

After the vehicle enters, the travelling direction is determined by means of the ramp structure 112 and the guide structure 113. The vehicle enters the positioning platform 11 via the ramp structure 112. The ramp structure 112 can be personally arranged according to personal preferences of the user, the site, etc., at one end or two ends of the battery swap platform 11 in the travelling direction, such that the user can choose to drive the vehicle into the battery swap platform 11 in a forward direction or into the battery swap platform 11 in a reversed direction, thus further enhancing the user experience.

In step S2, the hoisting device 12 hoists the vehicle to a first preset height.

In step S3, an unloaded battery swap trolley 14 enters an area under the vehicle, the vehicle is positioned for the second time, and the battery swap trolley 14 removes a used battery pack and transfers the used battery pack to a battery pack management device 3.

The second positioning process is completed by the photographing and positioning mechanism 16, the process specifically comprising:
photographing a positioning hole of the vehicle body and a positioning pin of the battery swap trolley 14 to obtain photographic data;
computing a current vehicle position deviation according to the photographic data; and
adjusting the position of the vehicle according to the obtained vehicle position deviation.

Providing the photographing and positioning mechanism 16 for the second positioning process of the vehicle improves the accuracy of battery swapping, and also prevents the occurrence of the situation where the positional error is greater than the threshold, causing the vehicle to be lowered again for the first positioning process, thus saving on the time for battery swapping, and improving the efficiency of battery swapping.

In step S4, the battery pack management device 3 delivers a fresh battery pack to the battery swap trolley 14, and the battery swap trolley 14 enters the area under the vehicle and installs the fresh battery pack to the vehicle, completing the battery swapping.

Various components of the automated battery swap device 1 of the invention are independently provided and can be used separately, the components are small in size, light in weight, easy to install and convenient to transport, and therefore, the entire system is simple in structure, reliable, and easy to operate and implement, so that modularization and miniaturization are realized. During the battery swap, the vehicle is coarsely positioned and then precisely positioned to improve the accuracy and efficiency of battery swapping. In addition, the automated battery swap device 1 is applicable to all parking lots and most vehicle repair stations, and can be widely applied to a variety of places. All the processes of the automated battery swap method of the invention can be completed automatically by means of a control device without the need of manual battery swapping, saving on manual labor with simple and easy operation during a battery swap, and improving the efficiency of battery swapping.

### II. Manual battery swapping

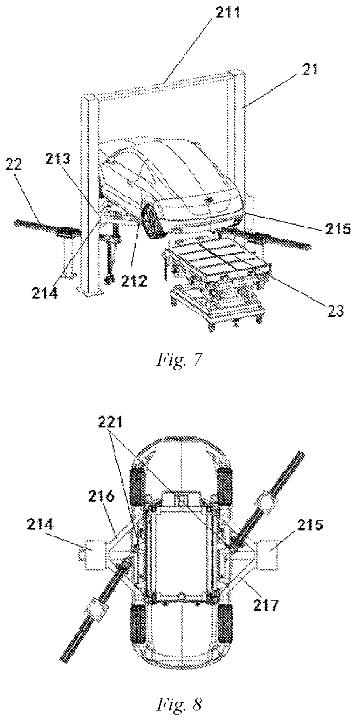

As shown in Fig. 7, the manual battery swap device 2 comprises: a vehicle hoister 21, an auxiliary bolt disassembly device 22 and a transfer trolley 23, wherein the vehicle hoister 21 is used to hoist the vehicle, and the vehicle hoister 21 is a double-column hoister; the auxiliary bolt disassembly device 22 is used to tighten or loosen a bolt, and the auxiliary bolt disassembly device 22 comprises one or more floor type manipulators; and the transfer trolley 23 is a running device for transporting, exchanging and lifting a battery pack.

In some embodiments, the vehicle hoister 21 comprises a main body frame structure 211, a support structure 212 and a hoisting structure 213, wherein the hoisting structure 213 is provided on the main body frame and is connected to the support structure 212; the hoisting structure 213 is used to lift the vehicle to a second preset height by hoisting the support structure 212, where the second preset height is the height of the vehicle, when in place for battery swapping in the manual battery swap device 2, from the ground. The height needing to be lifted is determined according to the model of the vehicle, user's preferences, etc. The hoisting structure 213 comprises a first lifting arm 214 and a second lifting arm 215. The hoisting structure 213 may be a lead screw rod, a hydraulic cylinder, etc.

As shown in Fig. 8, the support structure 212 is used to support vehicle lift points, and comprises a first support structure 216 and a second support structure 217. The first support structure 216 is provided on the first lifting arm 214, and the second support structure 217 is provided on the second lifting arm 215.

With the double-column hoister, not only smooth lifting of the vehicle is ensured, but also the space occupied by the battery swap system is further reduced. In addition, the double-column hoister is only a preferred embodiment of the invention, and other existing double-column hoisters or other hoisters capable of implementing the invention may also be applied thereto.

In some embodiments, the auxiliary bolt disassembly device 22 comprises two floor type manipulators 221, which are respectively provided on bottom faces corresponding to two ends of one diagonal of the vehicle for tightening or loosening the bolts, so as to remove the used battery pack or install a fresh battery pack.

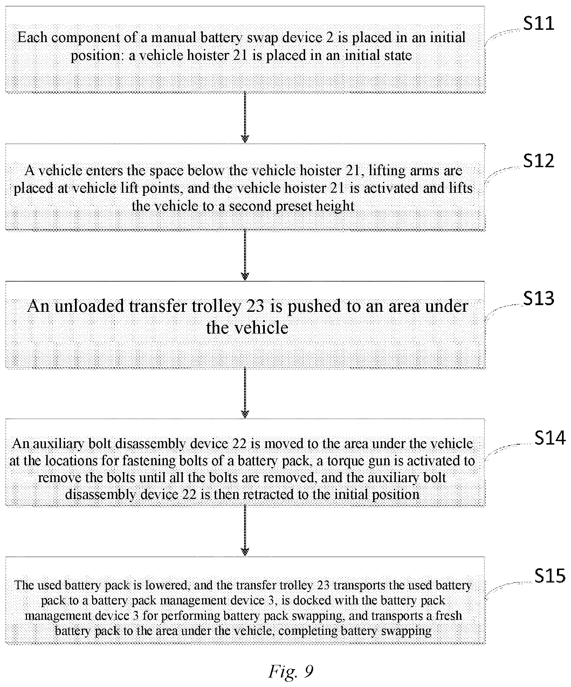

Based on the manual battery swap device 2, as shown in Fig. 9, when the manual battery swapping is performed, the operation method comprises the following steps.

In step S11, each component of the manual battery swap device 2 is placed in an initial position: the vehicle hoister 21 is placed in an initial state, that is to say, the first lifting arm 214 and the second lifting arm 215 are placed on two sides of the vehicle area and lowered to the lowest position; and the auxiliary bolt disassembly device 22 is placed on both sides of the vehicle area, which vehicle area is defined as follows: the vehicle enters a preset stop position of the vehicle hoister 21, at the time when the vehicle is parked and waiting for the lifting arms to lift the vehicle, the projection area of the vehicle onto the bottom surface in a direction perpendicular to the direction of the vehicle plane is the vehicle area.

In step S12, the vehicle enters the space below the vehicle hoister 21, the lifting arms are placed at the vehicle lift points, and the vehicle hoister 21 is activated and lifts the vehicle to the second preset height.

In step S13, the unloaded transfer trolley 23 is pushed to an area under the vehicle.

In step S 14, the auxiliary bolt disassembly device 22 is moved to the area under the vehicle at the locations for fastening bolts of the battery pack, the torque gun is activated to remove the bolts until all the bolts are removed, and the auxiliary bolt disassembly device 22 is then retracted to the initial position.

In step S14, the used battery pack is lowered, and the transfer trolley 23 transports the used battery pack to the second battery exchange port 5, and is docked with the battery pack management device 3 for performing battery pack swapping. To transport a fresh battery pack to the area under the vehicle, the transfer trolley 23 carrying the fresh battery pack is pushed to the area under the vehicle; and
then the auxiliary bolt disassembly device 22 is moved to the area under the vehicle at the locations for fastening bolts of the battery pack, the torque gun is activated to tighten the bolts until all the bolts are tightened, and the manual battery swapping is completed after retracting the auxiliary bolt disassembly device 22 to the initial position.

Various components of the manual battery swap device 2 are independently provided and can be used separately, the components are small in size, light in weight, easy to install and convenient to transport, and therefore, the entire system is simple in structure, reliable, and easy to operate and implement, so that modularization and miniaturization are realized. The manual battery swap device 2 is applicable to all parking lots and most vehicle repair stations, and can be widely applied to a variety of places.

During the manual battery swap, a battery swap worker can operate the transfer trolley, the vehicle hoister and the bolt disassembly device with a high battery swap accuracy, and with the manual battery swap device, battery swapping can be completed in a few minutes, achieving a high battery swap efficiency.

### III. Battery pack management device

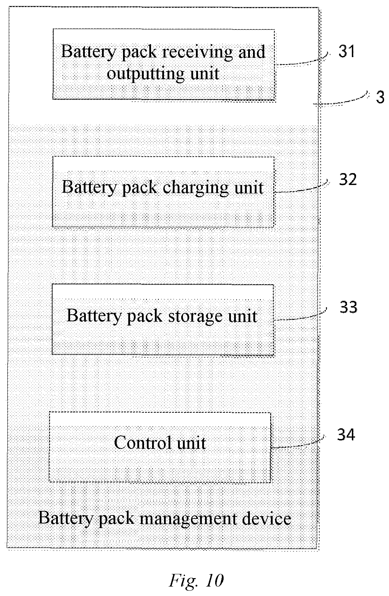

As shown in Fig. 10, the battery pack management device 3 further comprises: a battery pack receiving and outputting unit 31, a battery pack charging unit 32, a battery pack storage unit 33, and a control unit 34, wherein the battery pack receiving and outputting unit 31 is used to receive a used battery pack and output a fresh battery pack. The battery pack charging unit 32 is used to charge a used battery pack. The battery pack storage unit 33 is configured to store a fresh battery pack and a used battery pack and can manage multiple battery packs at the same time, and thus can complete battery swaps for multiple vehicles continuously without interruption, achieving a high battery swap efficiency. The control unit 34 is used to control the battery receiving and outputting unit 31 to receive or output a battery pack, to control the battery pack charging unit 32 to charge a battery pack, and to control the battery pack storage unit 33 to store a battery pack.

The battery swap system of the embodiment of the invention comprises both the automated battery swap device 1 and the manual battery swap device 2, and when one of the battery swap devices is faulty, the user can still use the other battery swap device to perform battery swapping normally, and the user experience is thus improved. Various components of the battery swap device of the invention are independently provided and can be used separately, the components are small in size, light in weight, and easy to install and convenient to transport, and therefore, the entire system is simple in structure, reliable, and easy to operate and implement, so that modularization and miniaturization are realized. All the processes for the automated battery swap device 1 can be completed automatically by means of a control device without the need of manual battery swapping, saving on manual labor. During the automated battery swap, the vehicle is coarsely positioned and then precisely positioned so that the accuracy and efficiency of battery swapping are improved. During the manual battery swap, a battery swap worker can operate the transfer trolley, the vehicle hoister and the bolt disassembly device with a high battery swap accuracy, and with the manual battery swap device, battery swapping can be completed in a few minutes, achieving a high battery swap efficiency. The battery swap system is applicable to all parking lots and most vehicle repair stations, and can be widely applied to a variety of places.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention so as to arrive at equivalent embodiments with equivalent changes. However, any simple amendments, equivalent changes and modifications made to the above embodiments according to the technical essence of the invention without departing from the technical solutions of the invention are still within the scope of the technical solutions of the invention.

## Claims

1. A battery swap system for an electric vehicle, **characterized by** comprising:
an automated battery swap device, a manual battery swap device and a battery pack management device, wherein
the automated battery swap device is provided on one side of the battery pack management device, and the manual battery swap device is provided on the other side of the battery pack management device; the battery pack management device comprises a first battery exchange port and a second battery exchange port;
the first battery exchange port is used for receiving a used battery pack swapped off by the automated battery swap device, and for supplying a fresh battery pack for the automated battery swap device; and
the second battery exchange port is used for receiving a used battery pack swapped off by the manual battery swap device, and for supplying a fresh battery pack for the manual battery swap device.

2. The battery swap system for an electric vehicle according to claim 1, **characterized in that**
the automated battery swap device comprises:
a battery swap platform for supporting and positioning a vehicle;
a hoisting device provided on the battery swap platform for hoisting the vehicle to a first preset height, the first preset height being the height of the vehicle, when in place for battery swapping in the automated battery swap device, from the battery swap platform;
a guide rail with one end extending into the battery swap platform and the other end extending to the first battery exchange port; and
a battery swap trolley provided on the guide rail and capable of reciprocating along the guide rail to complete transportation of a battery pack between the vehicle and the first battery exchange port.

3. The battery swap system for an electric vehicle according to claim 2, **characterized in that**
the automated battery swap device further comprises an automated battery swap control module for coordinating and controlling the operation of each component of the automated battery swap device.

4. The battery swap system for an electric vehicle according to claim 2, **characterized in that**
the battery swap platform comprises:
a platform body for supporting the vehicle;
a ramp structure provided at at least one end, in a travelling direction, of the platform body;
a guide structure provided at two ends, in a vehicle width direction, of the platform body; and
a positioning structure for positioning and adjusting front and rear wheels of the vehicle so as to adjust the vehicle to a preset battery swap position.

5. The battery swap system for an electric vehicle according to claim 2, **characterized in that**
the hoisting device comprises:
a column structure fixedly connected to two ends, in a vehicle width direction, of the battery swap platform;
lifting robotic arms provided on the column structure to hoist the vehicle; and
support mechanisms having a one-to-one correspondence with the lifting robotic arms and used for supporting vehicle lift points.

6. The battery swap system for an electric vehicle according to claim 5, **characterized in that**
the hoisting device further comprises:
a synchronous lifting suspension chain connected to the lifting robotic arms; and
a motor drive structure for driving the synchronous lifting suspension chain to enable the lifting robotic arms to synchronously perform lifting.

7. The battery swap system for an electric vehicle according to claim 5, **characterized in that**
the support mechanism is provided with a photographing and positioning mechanism, for photographing and positioning the vehicle and the battery swap trolley after the vehicle is lifted to the first preset height by the hoisting device and the battery swap trolley enters an area under the vehicle;
the photographing and positioning mechanism comprises:
a photographing unit for photographing a positioning hole of a vehicle body and a positioning pin of the battery swap trolley to obtain photographic data;
a computing unit for computing a current vehicle position deviation according to the photographic data; and
a fine adjustment unit for adjusting the support mechanisms according to the obtained vehicle position deviation so as to adjust the position of the vehicle.

8. The battery swap system for an electric vehicle according to claim 7, **characterized in that**
the fine adjustment unit comprises a driving portion and a floating portion, the driving portion driving the support mechanisms to move so as to bring the vehicle into movement; and the floating portion floats with the movement of the vehicle, so as to adjust the position of the vehicle.

9. The battery swap system for an electric vehicle according to claim 1, **characterized in that**
the manual battery swap device comprises:
a vehicle hoister for hoisting the vehicle;
an auxiliary bolt disassembly device for tightening or loosening a bolt; and
a transfer trolley for transporting, exchanging and lifting the battery pack.

10. The battery swap system for an electric vehicle according to claim 9, **characterized in that**
the vehicle hoister comprises a main body frame structure, a support structure and a hoisting structure,
wherein the hoisting structure is provided on the main body frame and is connected to the support structure, the hoisting structure is used to lift the vehicle to a second preset height by hoisting the support structure, the second preset height being the height of the vehicle, when in place for battery swapping in the manual battery swap device, from the ground, and
the hoisting structure comprises a first lifting arm and a second lifting arm; and
the support structure is used for supporting vehicle lift points, and comprises a first support structure provided on the first lifting arm and a second support structure provided on the second lifting arm.

11. The battery swap system for an electric vehicle according to claim 9, **characterized in that**
the auxiliary bolt disassembly device comprises a floor type manipulator, which comprises a torque gun for tightening or loosening a bolt.

12. The battery swap system for an electric vehicle according to claim 1, **characterized in that**
the battery pack management device further comprises:
a battery pack receiving and outputting unit for receiving a used battery pack and outputting a fresh battery pack;
a battery pack charging unit for charging a used battery pack;
a battery pack storage unit for storing a fresh battery pack and a used battery pack; and
a control unit for controlling the battery receiving and outputting unit to receive or output a battery pack, controlling the battery pack charging unit to charge a battery pack, and controlling the battery pack storage unit to store a battery pack.
